(19) **Europäisches Patentamt**
**European Patent Office**
**Office européen des brevets**

(11) **EP 4 610 134 A1**

(12) **EUROPEAN PATENT APPLICATION**
published in accordance with Art. 153(4) EPC

(43) Date of publication:
**03.09.2025 Bulletin 2025/36**

(21) Application number: **23882648.1**

(22) Date of filing: **24.10.2023**

(51) International Patent Classification (IPC):
**B60W 40/02** (2006.01)   **B60W 30/09** (2012.01)
**B60W 40/00** (2006.01)   **B60W 40/06** (2012.01)
**B60W 60/00** (2020.01)   **G01C 21/34** (2006.01)
**G08G 1/0968** (2006.01)   **G08G 1/16** (2006.01)

(52) Cooperative Patent Classification (CPC):
**B60W 30/09; B60W 40/00; B60W 40/02;**
**B60W 40/06; B60W 60/00; G01C 21/34;**
**G08G 1/0968; G08G 1/16**

(86) International application number:
**PCT/JP2023/038379**

(87) International publication number:
**WO 2024/090443 (02.05.2024 Gazette 2024/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **24.10.2022  JP 2022170165**
**08.12.2022  JP 2022196484**
**08.12.2022  JP 2022196485**

(71) Applicant: **SoftBank Group Corp.**
**Tokyo 105-7537 (JP)**

(72) Inventor: **SON, Masayoshi**
**Tokyo 105-7537 (JP)**

(74) Representative: **DREISS Patentanwälte PartG**
**mbB**
**Friedrichstraße 6**
**70174 Stuttgart (DE)**

(54) **INFORMATION PROCESSING DEVICE, VEHICLE, AND PROGRAM**

(57)    An information processing device of the disclosure includes an information acquisition unit capable of acquiring plural pieces of information related to a vehicle, an inference unit that uses deep learning to infer plural index values from the plural pieces of information acquired by the information acquisition unit, and a driving control unit that executes driving control of the vehicle on the basis of the plural index values.

FIG.2

EP 4 610 134 A1

## Description

Technical Field

The present disclosure relates to an information processing device, a vehicle, and a program including multivariate analysis using deep learning.

Background Art

Japanese Patent Application Laid-Open (JP-A) No. 2022-035198 discloses a vehicle having an autonomous driving function.

SUMMARY OF INVENTION

Technical Problem

In a conventional autonomous driving vehicle, it is difficult to, during traveling, analyze the influence of factors such as an air resistance and friction generated while the autonomous driving vehicle is traveling on a road.

Solution to Problem

According to an embodiment of the disclosure, there is provided an information processing device including: an information acquisition unit that is capable of acquiring a plurality of pieces of information related to a vehicle; an inference unit that uses deep learning to infer a plurality of index values from the plurality of pieces of information acquired by the information acquisition unit; and a driving control unit that executes driving control of the vehicle on the basis of the plurality of index values.

According to an embodiment of the disclosure, in the information processing device, the inference unit infers the plurality of index values from the plurality of pieces of information through multivariate analysis according to an integral method using the deep learning.

According to an embodiment of the disclosure, in the information processing device, the information acquisition unit acquires the plurality of pieces of information in units of nanoseconds, and the inference unit and the driving control unit execute inference of the plurality of index values and driving control of the vehicle in units of nanoseconds by using the plurality of pieces of information acquired in units of nanoseconds.

According to an embodiment of the disclosure, the information processing device further includes a strategy setting unit that sets a travel strategy until the vehicle reaches a destination, in which the travel strategy includes at least one theoretical value of an optimal route to the destination, a driving speed, a tilt, or braking, and the driving control unit includes a strategy update unit that updates the travel strategy on the basis of a difference between the plurality of index values and the theoretical values.

According to an embodiment of the disclosure, in the information processing device, the information acquisition unit includes a sensor that is provided in a lower portion of the vehicle and is capable of detecting a temperature, a material, and a tilt of a traveling ground.

According to an embodiment of the disclosure, in the information processing device, the plurality of index values include a first index value related to a first distance including a required stop distance required for the vehicle to stop without colliding with an obstacle in a traveling direction of the vehicle between the obstacle and the vehicle, the driving control includes traveling speed control, and the traveling speed control is control of a traveling speed of the vehicle, and is executed on the basis of the first index value.

According to an embodiment of the disclosure, in the information processing device, the traveling speed control includes control for causing the vehicle to travel at a maximum speed at which the vehicle does not collide with the obstacle, and the maximum speed is calculated on the basis of the first index value.

According to an embodiment of the disclosure, in the information processing device, the maximum speed is a maximum speed within a range of a legal speed or lower and/or a range of a front vehicle speed or lower, and the front vehicle speed is a traveling speed of another vehicle traveling in front of the vehicle.

According to an embodiment of the disclosure, in the information processing device, the first distance is a distance obtained by combining the required stop distance and a margin distance.

According to an embodiment of the disclosure, there is provided an information processing device applied to each of a plurality of vehicles, the information processing device including an information acquisition unit that is capable of acquiring a plurality of pieces of information related to the vehicle; an inference unit that infers a plurality of index values from the plurality of pieces of information acquired by the information acquisition unit by using a deep learning model; a strategy setting unit that sets a travel strategy until the vehicle reaches a destination; a strategy update unit that updates the travel strategy on the basis of the travel strategy set by the strategy setting unit and the plurality of index values; and a driving control unit that executes driving control of the vehicle according to the travel strategy updated by the strategy update unit, in which before a first vehicle among the plurality of vehicles reaches the destination, the strategy update unit updates the travel strategy set by the strategy setting unit on the basis of the plurality of index values inferred by the inference unit of a second vehicle preceding the first vehicle among the plurality of vehicles with respect to the destination.

According to an embodiment of the disclosure, in the information processing device, the strategy update unit acquires the plurality of index values used for updating the travel strategy before the first vehicle reaches the destination and while the first vehicle is traveling.

According to an embodiment of the disclosure, in the information processing device, the strategy update unit acquires the plurality of index values used for updating the travel strategy before the second vehicle reaches the destination.

According to an embodiment of the disclosure, in the information processing device, the travel strategy includes a plurality of theoretical values, the plurality of theoretical values include a theoretical value of a route until the vehicle reaches the destination, a theoretical value of a traveling speed until the vehicle reaches the destination, a theoretical value of an inclination of a ground until the vehicle reaches the destination, and/or a theoretical value of a brake control value until the vehicle reaches the destination, and the strategy update unit updates the travel strategy by updating the plurality of theoretical values on the basis of a result of comparison between the plurality of theoretical values and the plurality of index values.

According to an embodiment of the disclosure, the information processing device further includes a notification unit that provides a notification in a case in which a degree of difference between the theoretical value and the index value exceeds a threshold.

According to an embodiment of the disclosure, in the information processing device, the strategy update unit acquires the plurality of index values from a data management device that collects and manages the plurality of index values for at least one vehicle among the plurality of vehicles, and updates the travel strategy on the basis of the plurality of index values acquired from the data management device.

According to an embodiment of the disclosure, in the information processing device, the inference unit infers the plurality of index values from the plurality of pieces of information through multivariate analysis according to an integral method using the deep learning model.

According to an embodiment of the disclosure, in the information processing device, the information acquisition unit includes a temperature sensor capable of detecting a temperature of a ground on which the vehicle travels, a material sensor capable of detecting a material of the ground, and an inclination sensor capable of detecting an inclination of the ground.

According to an embodiment of the disclosure, a vehicle including the information processing device is provided.

According to an embodiment of the disclosure, there is provided a program for causing a computer to function as the information processing device.

The above summary of the disclosure does not enumerate all the necessary features of the disclosure. A subcombination of these feature groups may also be included in the disclosure.

BRIEF DESCRIPTION OF DRAWINGS

Fig. 1 is a schematic diagram showing an example of a vehicle equipped with a central brain.

Fig. 2 is a block diagram showing an example of an information processing device according to a first embodiment of the disclosure.

Fig. 3 is a block diagram showing an example of an information processing device according to a second embodiment of the disclosure.

Fig. 4 is a conceptual diagram showing an example of a configuration of an inference unit included in an information processing device according to a third embodiment of the disclosure.

Fig. 5 is a conceptual diagram showing an example of processing content of an information acquisition unit, the inference unit, and a driving control unit included in the information processing device according to the third embodiment of the disclosure.

Fig. 6 is a flowchart showing an example of a flow of a traveling speed control process according to the third embodiment of the disclosure.

Fig. 7 is a conceptual diagram showing an example of a configuration of an inference unit included in an information processing device according to a fourth embodiment of the disclosure.

Fig. 8 is a conceptual diagram showing an example of processing content of an information acquisition unit, the inference unit, and a driving control unit included in the information processing device according to the fourth embodiment of the disclosure.

Fig. 9 is a flowchart showing an example of a flow of a traveling speed control process strategy update process according to the fourth embodiment of the disclosure.

Fig. 10 is a conceptual diagram showing a modification example of the configuration of the information processing device according to the fourth embodiment of the disclosure.

Fig. 11 is a block diagram schematically showing an example of a hardware configuration of a computer that functions as the information processing device.

DESCRIPTION OF EMBODIMENTS

The disclosure will be more fully understood from the following detailed description. Further scope of application of the present application will be apparent from the following detailed description. However, the detailed description and the specific illustrative examples are preferred embodiments of the disclosure and are described for purposes of explanation only. From this detailed description, various changes and modifications will be apparent to those skilled in the art within the spirit and scope of the disclosure.

The applicant does not intend to present any of the described embodiments to the public, and among the disclosed modifications and alternatives, modifications and alternatives that may not be included in the scope of the claims are also included in the invention under the doctrine of equivalents.

Hereinafter, the disclosure will be described through embodiments, but the following embodiments are not intended to limit the objects described in the claims. Not all combinations of features described in the embodiments are essential for solving the problems of the disclosure.

(First Embodiment)

An information processing device of the disclosure may obtain an index value necessary for driving control with high accuracy on the basis of a lot of information related to the control of a vehicle. Therefore, at least a part of the information processing device of the disclosure may be mounted on a vehicle to realize control of the vehicle.

The information processing device of the disclosure can provide a traveling system that can realize autonomous driving in real time on the basis of data obtained by various sensor inputs in AI/multivariate analysis/goal seek/strategy planning/optimal probability solution/optimal speed solution/optimal course management/edge based on Level 6, and is adjusted on the basis of a delta optimal solution.

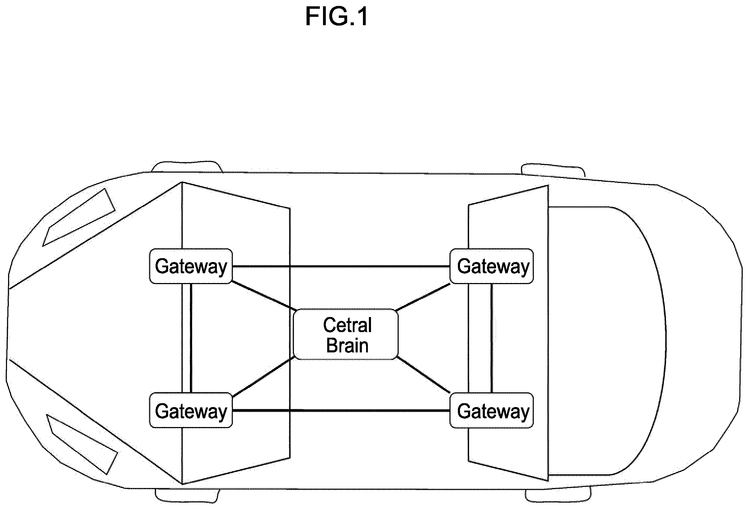

Fig. 1 is a schematic diagram showing an example of a vehicle equipped with a central brain. The central brain may be an example of an information processing device 1 according to the present embodiment. In the central brain, as shown in Fig. 1, a plurality of gateways may be communicatively connected. The central brain according to the embodiment can realize autonomous driving at Level 6 on the basis of a plurality of pieces of information acquired via the gateways.

"Level 6" is a level representing autonomous driving, and corresponds to a level higher than Level 5 representing fully autonomous driving. Level 5 represents fully autonomous driving, but is the same level as human driving, and there is still a probability that an accident or the like will occur. Level 6 represents a level higher than Level 5, and corresponds to a level at which a probability of the occurrence of an accident is lower than Level 5.

The calculation power at Level 6 (that is, the calculation power used to realize Level 6) is about 1000 times the calculation power at Level 5 (that is, the calculation power used to realize Level 5). Therefore, high-performance driving control that cannot be realized at Level 5 can be realized.

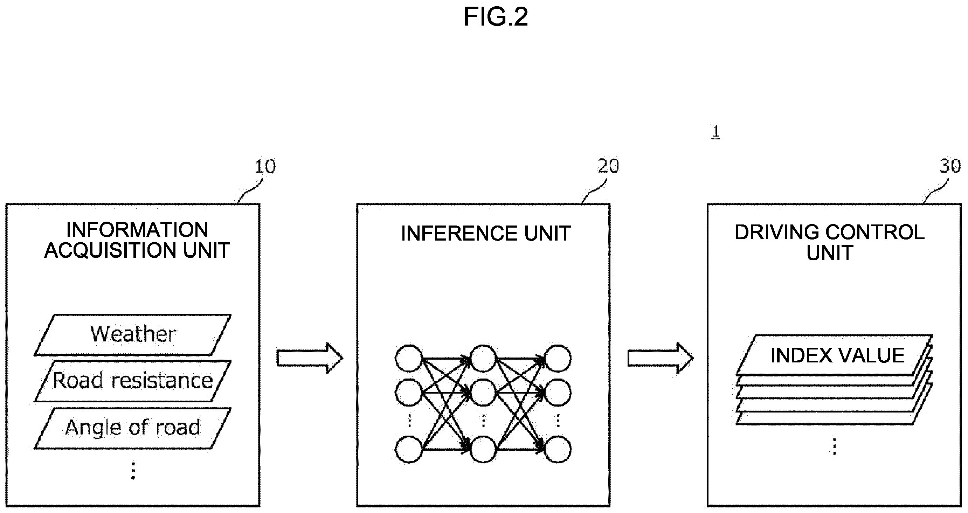

Fig. 2 is a block diagram showing an example of an information processing device according to the first embodiment of the disclosure. The information processing device 1 according to the embodiment includes at least an information acquisition unit 10 capable of acquiring a plurality of pieces of information related to a vehicle, an inference unit 20 that infers a plurality of index values from the plurality of pieces of information acquired by the information acquisition unit 10, and a driving control unit 30 that executes driving control of the vehicle on the basis of the plurality of index values.

The information acquisition unit 10 can acquire various types of information related to the vehicle. The information acquisition unit 10 may include, for example, communication means for acquiring information that can be acquired from sensors attached to various places of the vehicle, a server (not shown), or the like via a network. Examples of the sensors included in the information acquisition unit 10 include a radar, a LiDAR, a high-pixel/telephoto/ultra-wide angle/360 degrees/high-performance camera, a vision recognition, a microsound sensor, an ultrasonic sensor, a vibration sensor, an infrared sensor, an ultraviolet sensor, an electromagnetic wave sensor, a temperature sensor, a humidity sensor, a spot AI weather forecast, a material sensor, an inclination sensor, a high-precision multi-channel GPS, and/or a low-altitude satellite information. Alternatively, long tail incident AI data and the like can be exemplified. The long tail incident AI data is trip data of an automobile (that is, an automobile in which a device (here, as an example, the information processing device 1) capable of realizing the calculation power at Level 5 is mounted) mounted at Level 5.

Examples of the information that can be acquired by the plurality of types of sensors include a temperature and a material of the ground (for example, a road), an outside temperature, a ground inclination (tilt), a frozen state and a moisture amount of the road, a material and a wear state of each tire, an air pressure, a road width, the presence or absence of passing prohibition, the presence or absence of an oncoming vehicle, the vehicle type information of preceding and following vehicles, cruising states of these vehicles, and/or surrounding situations (birds, animals, soccer balls, accident vehicles, earthquakes, fires, winds, typhoons, heavy rain, light rain, snowstorm, and/or fog, etc.). In the embodiment, using the calculation power at Level 6 enables the detection thereof to be performed every nanosecond.

It should be particularly noted that the above information acquisition unit 10 includes a vehicle lower sensor provided in a lower portion of the vehicle and capable of detecting the temperature, a material, and a tilt of the ground on which the vehicle is traveling. The independent smart tilt can be executed by using the vehicle lower sensor.

The inference unit 20 may be capable of inferring an indexed value related to control of the vehicle from a plurality of pieces of information acquired by the information acquisition unit 10 by using machine learning, more specifically, deep learning. In other words, the inference unit 20 may be configured by artificial intelligence (AI).

The inference unit 20 can obtain an accurate index value by performing multivariate analysis (see, for example, Formula (2)) based on an integral method as shown in the following Formula (1) by using the calculation power used for realizing Level 6 (hereinafter, also referred to as "calculation power at Level 6") on data and long tail incident AI data for every nanosecond collected by many sensor groups and the like in the information acquisition unit 10. More specifically, while obtaining an integral value of various delta values having ultra-high resolution with the calculation power at Level 6, an indexed value of each variable is obtained at an edge level and in real time, and a result (that is, an index value that is an indexed value of each variable) occurring in the next nanosecond can be obtained with the highest probability theoretical value. In order to realize this, for example, an integral value obtained by time-integrating a delta value (for example, a minute time change value) of a function (in other words, a function indicating a behavior of each variable) capable of specifying each of variables (for example, a plurality of pieces of information acquired by the information acquisition unit 10) such as an air resistance, a road resistance, a road element (for example, dirt), and a slip coefficient is input to a deep learning model (for example, a trained model obtained by performing deep learning on a neural network) of the inference unit 20. The deep learning model of the inference unit 20 outputs an index value (for example, an index value having the highest certainty factor (that is, an evaluation value)) corresponding to the input integral value. The output of the index value is performed in units of nanoseconds.

[Math. 1]

$$v = \int_a^b f(A)dt \qquad (1)$$

[Math. 2]

$$V_n = DL(f(A,B,C,D,\cdots,N)(dA_n/dt)) \quad (2)$$

As an example, in Formula (1), "f(A)" is an expression in which a function indicating a behavior of each of variables such as an air resistance, a road resistance, a road element (for example, dirt), and a slip coefficient is expressed in a simplified manner. As an example, Formula (1) is a formula indicating the time integral v of "f (A)" from the time point a to the time point b. In the formula, DL represents deep learning (for example, a deep learning model optimized by performing deep learning on a neural network), $dA_n/dt$ represents a delta value of f(A, B, C, D, ..., N), A, B, C, D,..., and N represent an air resistance, a road resistance, a road element (for example, dirt), a slip coefficient, and the like, f(A, B, C, D, ..., N) represents a function indicating behaviors of A, B, C, D,..., and N, and Vn represents a value (that is, an index value) output from the deep learning model optimized by performing deep learning on the neural network.

Here, a form example in which an integral value obtained by time-integrating the delta value of the function is input to the deep learning model of the inference unit 20 is described, but this is merely an example. For example, an integral value (for example, a result occurring in the next nanosecond) obtained by time-integrating a delta value of a function indicating a behavior of each of variables such as an air resistance, a road resistance, a road element, and a slip coefficient may be inferred by the deep learning model of the inference unit 20, and as an inference result, an integral value having the highest certainty factor (that is, an evaluation value) may be acquired by the inference unit 20 every nanosecond.

Here, a form example in which an integral value is input to the deep learning model or an integral value is output from the deep learning model is described, but this is merely an example, and the technology of the disclosure can be established without using an integral value. For example, at least one index value may be inferred by a deep learning model optimized by performing deep learning on a neural network by using training data in which values corresponding to A, B, C, D,..., and N are used as example data and values corresponding to at least one index value (for example, the result occurring in the next nanosecond) are used as correct answer data.

An indexed value (that is, an index value) of each variable obtained by the inference unit 20 can be further refined by increasing the number of times of deep learning. For example, it is possible to calculate a more accurate index value by using enormous data such as a tire, rotation of a motor, a steering angle, a material of a road, weather, an influence of dust or at the time of secondary curved deceleration, slip, steering for collapse of balance or re-acquisition, and a speed control method, or long tail incident AI data.

The driving control unit 30 may execute driving control of the vehicle on the basis of the plurality of index values specified by the inference unit 20. The driving control unit 30 may be capable of realizing autonomous driving control of the vehicle. Specifically, it is possible to acquire a result that occurs in the next nanosecond from a plurality of index values with the highest probability theoretical value and perform the driving control of the vehicle in consideration of the probability theoretical value. That is, the driving control unit 30 may acquire an index value having the highest certainty factor (that is, an evaluation value) as a result of occurrence in the next nanosecond from the plurality of index values, and execute the driving control of the vehicle according to the acquired index value.

According to the information processing device 1 having the above-described configuration, since analysis and inference of information can be performed by using the calculation power at Level 6 that is extremely larger than the calculation power at Level 5, it is possible to perform detailed analysis at a level that is not compared with the related art. This enables vehicle control for safe autonomous driving. The multivariate analysis using the above AI can produce a value difference of 1000 times compared to the world at Level 5.

(Second Embodiment)

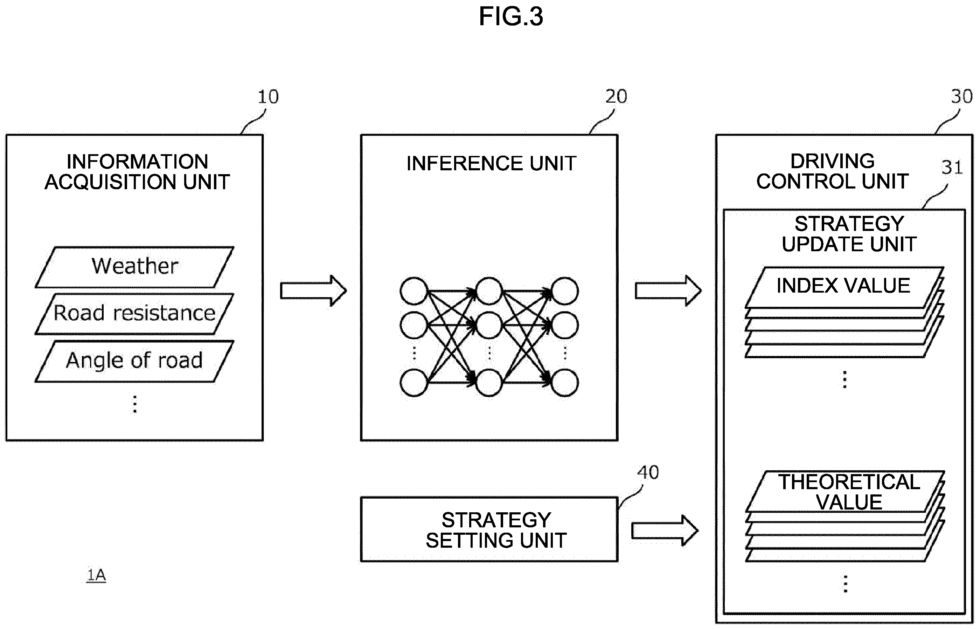

Fig. 3 is a block diagram showing an example of an information processing device according to a second embodiment of the disclosure. An information processing device 1A according to the embodiment is different from the information processing device 1 in that the information processing device 1A according to the embodiment includes a strategy setting unit 40 that sets a travel strategy for a vehicle to reach a destination, in addition to the constituents of the information processing device 1 according to the first embodiment described above.

The strategy setting unit 40 may set a travel strategy from a current location to a destination on the basis of information regarding the destination input by an occupant or the like of a vehicle, traffic information between the current location and the destination, or the like. In this case, information at that time at which the strategy setting is calculated, that is, data currently acquired by the information acquisition unit 10 may be considered. This is to calculate a more realistic theoretical value by taking into consideration not only simple calculation of a route to a destination but also a surrounding situation at that moment. The travel strategy may include at least one theoretical value of an optimal route to a destination (also referred to as a strategy route), a traveling speed, a tilt, or braking. Preferably, the travel strategy may include all theoretical values of the optimal route, the travel speed, the tilt, and the braking described above.

The plurality of theoretical values configuring the travel strategy set by the strategy setting unit 40 can be used for autonomous driving control in the driving control unit 30. In addition thereto, the driving control unit 30 preferably includes a strategy update unit 31 capable of updating the travel strategy on the basis of differences between the plurality of index values (for example, an index value indicating a traveling speed, an index value indicating a tilt, and an index value indicating a brake control value) inferred by the inference unit 20 and respective theoretical values (for example, a theoretical value of the traveling speed, a theoretical value of the tilt, and a theoretical value of the brake control value) set by the strategy setting unit 40.

An index value inferred by the inference unit 20 is detected while the vehicle is traveling, specifically, while the vehicle is actually traveling. For example, the index value is inferred on the basis of a friction coefficient. Therefore, by considering this index value, the strategy update unit 31 can cope with the momentary change at the time of passing through the strategy route. Specifically, the strategy update unit 31 calculates a difference (delta value) between the theoretical value and the index value included in the travel strategy, and can thus derive an optimal solution again and reformulate the strategy route. A first example of the optimal solution is an index value used instead of a theoretical value. A second example of the optimal solution is an adjusted index value used instead of a theoretical value. A third example of the optimal solution is a solution obtained by performing regression analysis using at least one theoretical value and at least one index value. A fourth example of the optimal solution is a statistical value (for example, a median value and/or an average value) obtained from a theoretical value and an index value. Which of the first to fourth examples is derived as an optimal solution by the strategy update unit 31 may be determined according to a magnitude of a difference, for example. An optimal solution is not limited to the first to fourth examples, and may be an optimal solution obtained by using other methods.

The strategy update unit 31 derives the optimal solution again as described above, and thus it is possible to realize almost all autonomous driving control without slipping, for example. That is, in a case in which autonomous driving control in which the vehicle slips when autonomous driving control is performed only according to a theoretical value is performed, and autonomous driving control in which a vehicle does not slip with a margin on the safety side when autonomous driving control is performed only according to an index value is performed, an index value adjusted by subtracting the margin is used as a theoretical value by the driving control unit 30, whereby the closest autonomous driving control in which the vehicle does not slip is realized. Since the calculation power at Level 6 described above can be used in such an update process, correction and fine adjustment can be performed in units of nanoseconds, and more precise traveling control can be realized.

In a case in which the information acquisition unit 10 includes the above-described vehicle lower sensor, the vehicle lower sensor also detects the temperature, a material, and the like of the ground, so that it is possible to cope with the momentary change at the time of passing through the strategy route. An independent smart tilt can also be implemented in calculating a travel course included in the travel strategy. Even in a case in which another information is detected (for example, flying tires, fragments, or animals), it is possible to recalculate an optimal travel course at an instant and perform optimal course management by coping with the momentary change at the time of passing through the strategy route.

(Third Embodiment)

In a third embodiment described below, an information processing device and the like capable of, during traveling, analyzing the influence of elements such as air resistance and/or friction generated while an autonomous driving vehicle is traveling on a road will be mainly described.

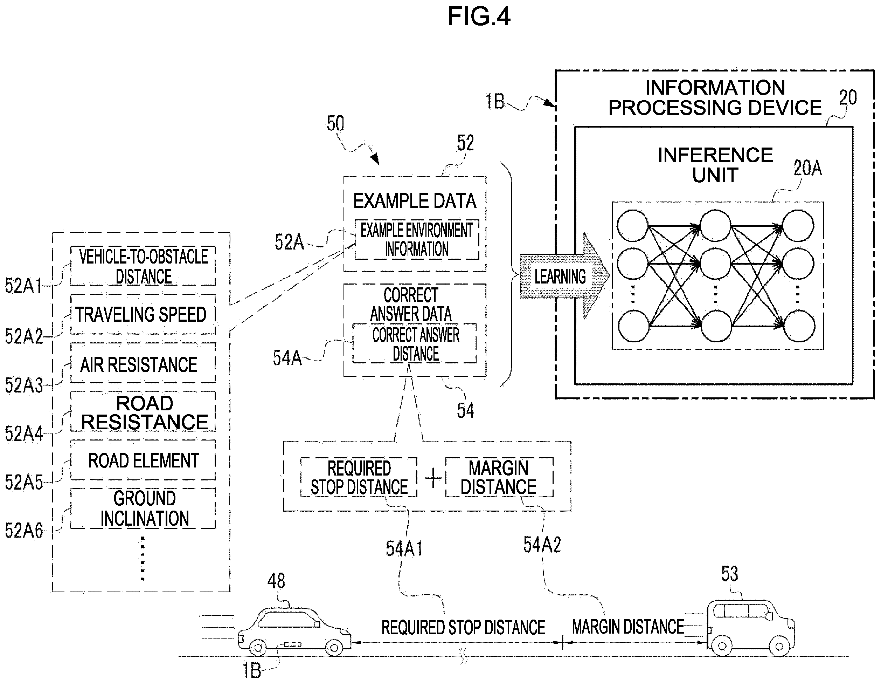

Fig. 4 is a conceptual diagram showing an example of a configuration of an inference unit 20 included in an information processing device 1B according to the third embodiment of the disclosure.

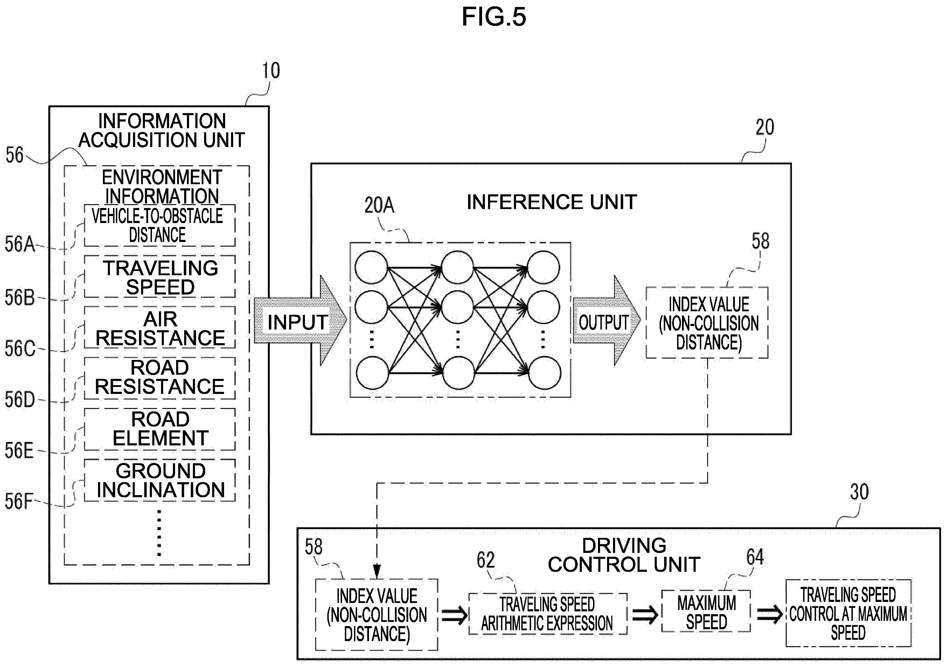

In the example shown in Fig. 4, the information processing device 1B is mounted on a vehicle 48. The inference unit 20 included in the information processing device 1B includes a deep learning model 20A. The deep learning model 20A is a trained model optimized by performing deep learning using a plurality of pieces of training data 50 on a neural network. The inference unit 20 uses the deep learning model 20A to infer a plurality of index values from environment information 56 (see Fig. 5).

The training data 50 is a data set including example data 52 and correct answer data 54. The example data 52 includes example environment information 52A. The example environment information 52A is information obtained by assuming the environment information 56 (see Fig. 5) acquired by the information acquisition unit 10. For example, the example environment information 52A is information including a vehicle-to-obstacle distance 52A1, a traveling speed 52A2, an air resistance 52A3, a road resistance 52A4, a road element 52A5, a ground inclination 52A6, and the like. Here, the air resistance 52A3 corresponds to the air resistance exemplified in the first embodiment, the road resistance 52A4 corresponds to the road resistance exemplified in the first embodiment, the road element 52A5 corresponds to the road element exemplified in the first embodiment, and the ground inclination 52A6 corresponds to the tilt exemplified in the first embodiment. The vehicle-to-obstacle distance 52A1 is a distance between the vehicle 48 and an obstacle in a traveling direction of the vehicle 48 (in the example shown in Fig. 4, a vehicle 53 immediately in front of the vehicle 48). The traveling speed 52A2 is a traveling speed of the vehicle 48.

The correct answer data 54 is correct answer data (that is, an annotation) for the example data 52. The correct answer data 54 has a correct answer distance 54A. The correct answer distance 54A is an example of a "first distance" according to the technology of the disclosure.

The correct answer distance 54A is a distance obtained by combining a required stop distance 54A1 and a margin distance 54A2. The required stop distance 54A1 is a distance required for the vehicle 48 to stop without colliding with the vehicle 53 between the vehicle 48 and the vehicle 53. The vehicle 53 is an obstacle in the traveling direction of the vehicle 48, and is traveling in front of the vehicle 48. In the example shown in Fig. 4, the vehicle 53 traveling in front of the vehicle 48 is exemplified, but the technology of the disclosure is not limited thereto, and an obstacle may be the vehicle 53 stopped in front of the vehicle 48, a pedestrian existing in front of the vehicle 48, or the like as long as an obstacle exists in the traveling direction of the vehicle 48.

The margin distance 54A2 is a distance (for example, a distance of about several meters) excessively determined in order to increase reliability for avoiding a collision between the vehicle 48 and the vehicle 53.

Fig. 5 is a conceptual diagram showing an example of processing content of the information acquisition unit 10, the inference unit 20, and the driving control unit 30 included in the information processing device 1B according to the third embodiment.

The information acquisition unit 10 acquires the environment information 56 in the same manner as in the first embodiment. The environment information 56 is information including a vehicle-to-obstacle distance 56A, a traveling speed 56B, an air resistance 56C, a road resistance 56D, a road element 56E, a ground inclination 56F, and the like.

The inference unit 20 inputs the environment information 56 acquired by the information acquisition unit 10 to the deep learning model 20A. As a result, the deep learning model 20A outputs an index value 58 corresponding to the environment information 56 (that is, an index value related to the correct answer distance 54A corresponding to the environment information 56). The inference unit 20 acquires the index value 58 output from the deep learning model 20A.

The index value 58 is an index value inferred by the deep learning model 20A as a non-collision distance. The non-collision distance is, for example, a distance at which the vehicle 48 and an obstacle in the traveling direction of the vehicle 48 (in the example shown in Fig. 4, the vehicle 53) do not collide with each other. The index value 58 may be an index value obtained by performing multivariate analysis using the integral method described in the first embodiment. Note that the index value 58 is an example of a "first index value" according to the technology of the disclosure.

The driving control unit 30 calculates a maximum speed 62 at which the vehicle 48 does not collide with an obstacle (for example, a vehicle or a pedestrian existing in front of the vehicle 48) in the traveling direction from the index value 58 acquired by the inference unit 20 by using a traveling speed arithmetic expression 60. The traveling speed arithmetic expression 60 is an arithmetic expression having the index value 58 as an independent variable and the maximum speed 62 as a dependent variable. The maximum speed 62 is a maximum speed within a range of a legal speed or lower and a front vehicle speed or lower. The front vehicle speed is a traveling speed of another vehicle traveling in front of the vehicle 48 (for example, one preceding vehicle in the traveling direction of the vehicle 48). For example, the front vehicle speed is acquired by the information acquisition unit 10 or the like. The driving control unit 30 calculates the maximum speed 62 with reference to the front vehicle speed acquired by information acquisition unit 10 or the like.

The driving control unit 30 executes driving control of the vehicle on the basis of the plurality of index values inferred by the inference unit 20. The driving control includes traveling speed control. The traveling speed control is control of a traveling speed of the vehicle 48, and is executed on the basis of the index value 58. The traveling speed control includes control for causing the vehicle 48 to travel at the maximum speed 62. That is, the driving control unit 30 controls a drive system (for example, a power source that transmits power to the wheels) of the vehicle 48 so that the vehicle 48 travels at the maximum speed 62 calculated on the basis of the index value 58.

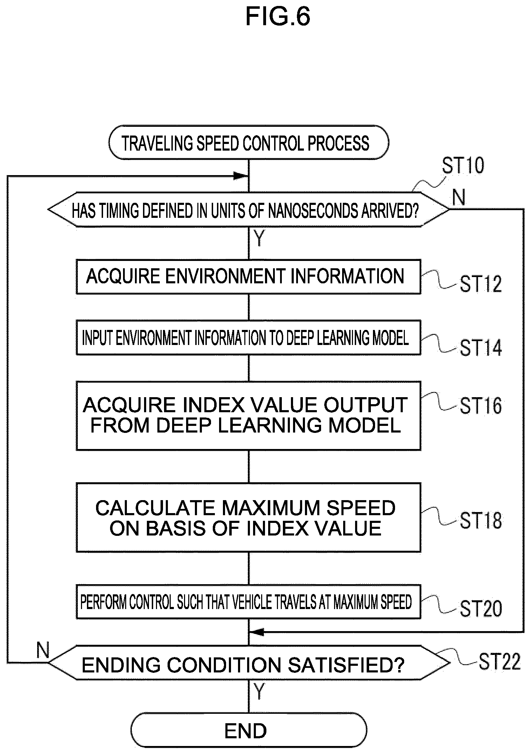

Fig. 6 is a flowchart showing an example of a flow of a traveling speed control process executed by the information processing device 1B.

In the traveling speed control process shown in Fig. 6, first, in step ST10, the information acquisition unit 10 determines whether or not a timing defined in units of nanoseconds has arrived (for example, whether or not a nanosecond has elapsed). In a case in which the timing defined in units of nanoseconds has not arrived in step ST10, the determination is negative, and the traveling speed control process proceeds to step ST22. In step ST10, in a case in which the timing defined in units of nanoseconds has arrived, the determination is positive, and the traveling speed control process proceeds to step ST12.

In step ST12, the information acquisition unit 10 acquires the environment information 56. After the process in step ST12 is executed, the traveling speed control process proceeds to step ST14.

In step ST14, the inference unit 20 inputs the environment information 56 acquired by the information acquisition unit 10 in step ST12 to the deep learning model 20A. In response to this, the deep learning model 20A outputs the index value 58 corresponding to the input environment information 56. After the process in step ST14 is executed, the traveling speed control process proceeds to step ST16.

In step ST16, the inference unit 20 acquires the index value 58 output from the deep learning model 20A. After the process in step ST16 is executed, the traveling speed control process proceeds to step ST18.

In step ST18, the driving control unit 30 calculates the maximum speed 62 from the index value 58 acquired by the inference unit 20 in step ST16 by using the traveling speed arithmetic expression 60. After the process in step ST18 is executed, the traveling speed control process proceeds to step ST20.

In step ST20, the driving control unit 30 controls the drive system of the vehicle 48 to cause the vehicle 48 to travel at the maximum speed 62 calculated in step ST18. After the process in step ST20 is executed, the traveling speed control process proceeds to step ST22.

In step ST22, the driving control unit 30 determines whether or not a condition for ending the traveling speed control process is satisfied. As an example of the condition for ending the traveling speed control process, there is a condition that an instruction to end the traveling speed control process is given to the information processing device 1B. In a case in which the condition for ending the traveling speed control process is not satisfied in step ST22, the determination is negative, and the traveling speed control process proceeds to step ST10. In a case in which the condition for ending the traveling speed control process is satisfied in step ST22, the determination is positive, and the traveling speed control process is ended.

As described above, in the third embodiment, the inference unit 20 infers the index value 58 related to the correct answer distance 54A including the required stop distance 54A1 required for the vehicle 48 to stop without colliding with an obstacle between the obstacle in the traveling direction of the vehicle 48 and the vehicle 48. The driving control unit 30 controls a traveling speed of the vehicle 48 on the basis of the index value 58. Therefore, the vehicle 48 can travel to a destination safely and in a short time.

In the third embodiment, the index value 58 is inferred in units of nanoseconds, and the maximum speed 62 is calculated on the basis of the index value 58. The maximum speed 62 is the maximum speed at which the vehicle 48 does not collide with an obstacle, and the driving control unit 30 controls the drive system of the vehicle 48 to cause the vehicle 48 to travel at the maximum speed 62. Therefore, the vehicle 48 can travel to a destination safely and in the shortest time.

In the third embodiment, the maximum speed 62 is calculated within a range of a legal speed or lower and a front vehicle speed or lower. Therefore, the vehicle 48 can travel to the destination safely and in the shortest time while complying with the legal speed.

In the third embodiment, a distance obtained by combining the required stop distance 54A1 and the margin distance 54A2 is used as the correct answer distance 54A. Therefore, the possibility of collision between the vehicle 48 and the vehicle 53 can be reduced compared with a case in which only the required stop distance 54A1 is used as the correct answer distance 54A.

In the third embodiment, the index value inferred as the non-collision distance by the deep learning model 20A has been exemplified as an example of the index value 58, but the technology of the disclosure is not limited thereto. For example, as the index value 58, an index value indicating the maximum speed 62 may be inferred by the deep learning model 20A. In this case, for example, the drive system of the vehicle 48 may be controlled by the driving control unit 30 so that the vehicle 48 travels at the maximum speed 62 indicated by the index value 58.

In the third embodiment, the example in which the maximum speed 62 is calculated has been described, but this is merely an example, and a speed higher than a designated speed and lower than the maximum speed 62 may be calculated. Instead of the speed, a rotational spin speed of a wheel may be calculated, and information regarding the speed (that is, a parameter used to control the speed of the vehicle 48) may be calculated.

In the third embodiment, the correct answer distance 54A is a distance obtained by combining the required stop distance 54A1 and the margin distance 54A2. However, this is merely an example, and only the required stop distance 54A1 may be used as the correct answer distance 54A.

(Fourth Embodiment)

In a fourth embodiment described below, an information processing device and the like capable of realizing highly accurate autonomous driving in consideration of an actual environment in which a vehicle travels and reaches a destination will be mainly described.

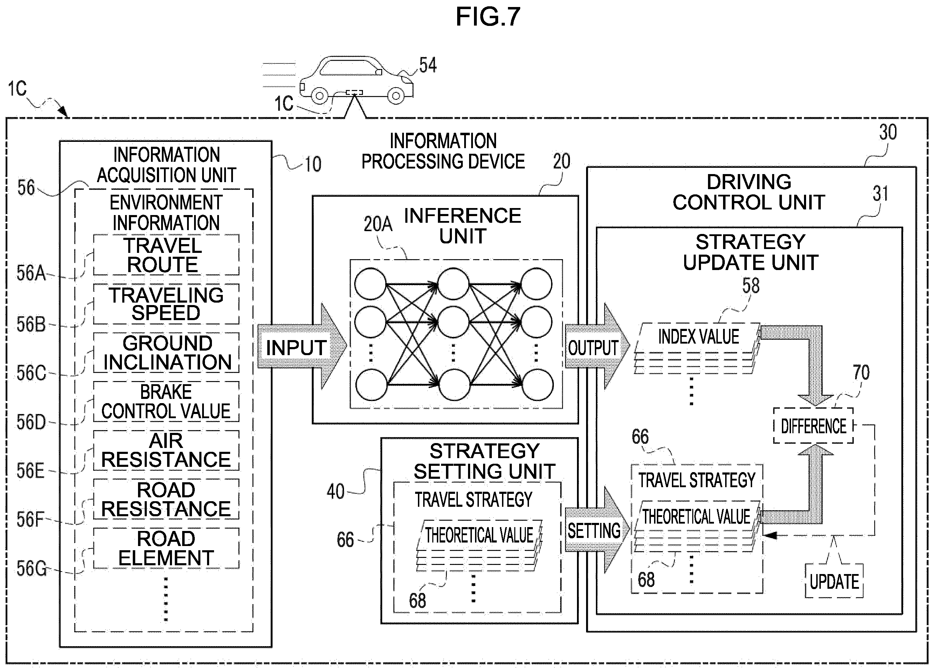

Fig. 7 is a conceptual diagram showing an example of a configuration of an information processing device 1C according to the fourth embodiment of the disclosure.

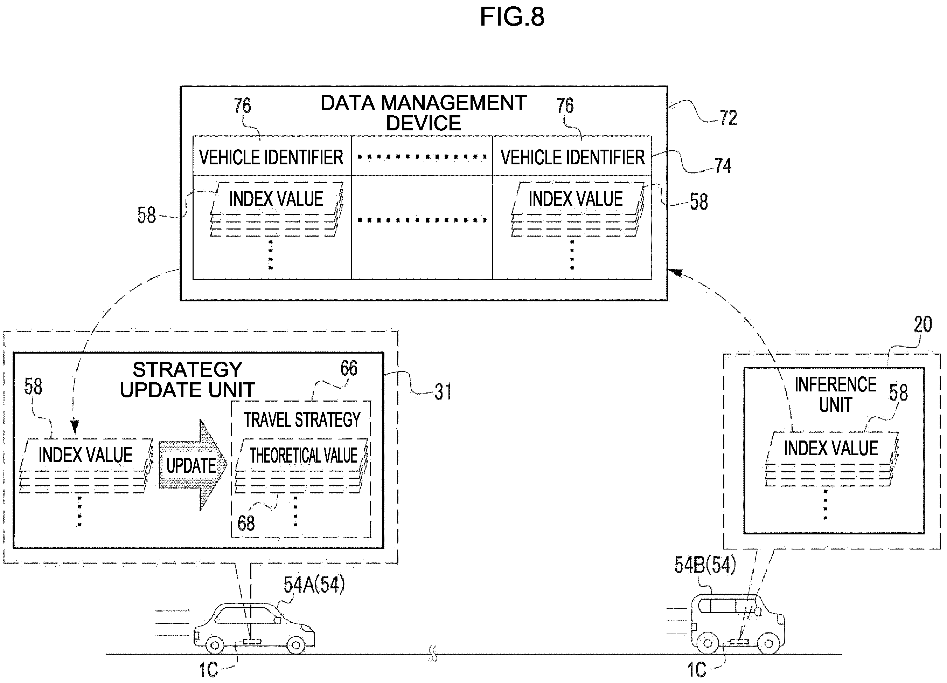

The information processing device 1C is mounted on a plurality of vehicles 54 (see also Fig. 8). Similarly to the first embodiment, the information processing device 1C includes an information acquisition unit 10, an inference unit 20, a driving control unit 30, and a strategy setting unit 40. The driving control unit 30 includes a strategy update unit 31. Although the strategy update unit 31 is shown as a part of the driving control unit 30 in the example shown in Fig. 7, this is merely an example, and the strategy update unit 31 may be provided outside the driving control unit 30.

The information acquisition unit 10 acquires the environment information 56 in the same manner as in the first embodiment. The environment information 56 is information including a travel route 56A which is a route on which the vehicle 54 travels (for example, a route on which the vehicle 54 travels, the route being defined by coordinates), a traveling speed 56B which is a speed at which the vehicle 54 is traveling, a ground inclination 56C corresponding to the tilt described in the first embodiment, a brake control value 56D (in other words, a parameter for controlling the brake), an air resistance 56E, a road resistance 56F, a road element 56G, and the like.

The inference unit 20 includes a deep learning model 20A. The deep learning model 20A is a trained model optimized by performing deep learning using a plurality of pieces of training data on a neural network. The inference unit 20 uses the deep learning model 20A to infer a plurality of index values from the environment information 56.

The training data used for performing deep learning on the deep learning model 20A is a data set including example data and correct answer data (that is, an annotation) for the example data. The example data is data obtained by assuming the environment information 56, and the correct answer data is data obtained by assuming a plurality of index values 58.

The inference unit 20 inputs the environment information 56 acquired by the information acquisition unit 10 to the deep learning model 20A. As a result, the deep learning model 20A outputs a plurality of index values 58 (that is, a plurality of control values used for autonomous driving control of the vehicle 54) corresponding to the environment information 56.

The strategy update unit 31 acquires the plurality of index values 58 output from the deep learning model 20A. The strategy setting unit 40 sets a travel strategy 66 until the vehicle 54 reaches a destination. Here, the setting of the travel strategy 66 indicates, for example, a process of assigning the travel strategy 66 to the strategy update unit 31.

The travel strategy 66 includes a plurality of theoretical values 68. The plurality of theoretical values 68 include a theoretical value of a route (for example, a route assumed as a route on which the vehicle 54 travels, the route being defined by coordinates) until the vehicle 54 reaches the destination, a theoretical value of a traveling speed until the vehicle 54 reaches the destination, a theoretical value of an inclination of the ground until the vehicle 54 reaches the destination, and a theoretical value of a brake control value until the vehicle 54 reaches the destination.

The strategy update unit 31 updates the travel strategy 66 on the basis of the travel strategy 66 set by the strategy setting unit 40 and the plurality of index values 58 output from the inference unit 20. For example, the strategy update unit 31 updates the travel strategy 66 by updating the plurality of theoretical values 68 on the basis of differences 70 between the plurality of theoretical values 68 and the plurality of index values 58 included in the travel strategy 66.

The update of the theoretical value 68 indicates, in other words, derivation of an optimal solution. A first example of the optimal solution is an index value 58 used instead of the theoretical value 68. A second example of the optimal solution is an adjusted index value 58 used instead of the theoretical value 68. A third example of the optimal solution is a solution obtained by performing regression analysis using at least one theoretical value 68 and at least one index value 58. A fourth example of the optimal solution is a statistical value (for example, a median value and/or an average value) obtained from the theoretical value 68 and the index value 58. Which of the first to fourth examples is derived as an optimal solution by the strategy update unit 31 may be determined according to a magnitude of the difference 70, for example. An optimal solution is not limited to the first to fourth examples, and may be an optimal solution obtained by using other methods.

Here, the differences 70 between the plurality of theoretical values 68 and the plurality of index values 58 include a difference between the theoretical value 68 and the index value 58 for each of a plurality of items (for example, a route until the vehicle 54 reaches a destination, a traveling speed until the vehicle 54 reaches the destination, an inclination of the ground until the vehicle 54 reaches the destination, and a brake control value until the vehicle 54 reaches the destination).

Note that the difference 70 is an example of "a result of comparing a plurality of theoretical values with a plurality of index values" according to the technology of the disclosure. Although the difference 70 is exemplified here, this is merely an example, and a difference may be, for example, a ratio of the other to one of the theoretical value 68 and the index value 58, or any value that can specify the degree of difference between a plurality of theoretical values and a plurality of index values.

The driving control unit 30 executes driving control of the vehicle 54 according to the travel strategy 66 (for example, a plurality of updated theoretical values 68) updated by the strategy update unit 31.

Fig. 8 is a conceptual diagram showing an example of a mode in which the travel strategy 66 of a first vehicle 54A among the plurality of vehicles 54 on which the information processing device 1C according to the fourth embodiment of the disclosure is mounted is updated on the basis of the plurality of index values 58 inferred by the second vehicle 54B.

The first vehicle 54A and a second vehicle 54B are traveling toward the same destination, and the second vehicle 54B precedes the first vehicle 54A with respect to the destination. That is, the second vehicle 54B arrives at the destination earlier than the first vehicle 54A.

Data regarding the plurality of vehicles 54 is collected and managed by a data management device 72. The data management device 72 is wirelessly communicatively connected to the plurality of information processing devices 1C mounted on the plurality of vehicles 54. An example of the data management device 72 is a server.

The data management device 72 constructs a database 74 on the basis of various types of information obtained from the information processing devices 1C of the respective vehicles 54. The database 74 includes a vehicle identifier 76 that is an identifier that can identify the vehicle 54 and a plurality of index values 58. In the database 74, a vehicle identifier 76 and a plurality of index values 58 (that is, the plurality of index values 58 inferred by the inference unit 20 included in the information processing device 1C of the vehicle 54 specified from the corresponding vehicle identifier 76) are associated with each vehicle 54.

Before the first vehicle 54A reaches the destination and while the first vehicle 54A is traveling, the strategy update unit 31 included in the information processing device 1C of the first vehicle 54A (hereinafter, referred to as a "strategy update unit 31 of the first vehicle 54A") acquires, from the data management device 72, a plurality of index values 58 inferred by the inference unit 20 included in the information processing device 1C of the second vehicle 54B (hereinafter, referred to as an "inference unit 20 of the second vehicle 54B").

For example, in response to a request from the strategy update unit 31 of the first vehicle 54A, the data management device 72 acquires a plurality of index values 58 corresponding to the second vehicle 54B from the database 74, and transmits the plurality of index values 58 acquired from the database 74 to the strategy update unit 31 of the first vehicle 54A. The strategy update unit 31 of the first vehicle 54A receives the plurality of index values 58 transmitted from the data management device 72, and updates the travel strategy 66 on the basis of the received plurality of index values 58.

For example, the travel strategy 66 is updated by updating the plurality of theoretical values 68 on the basis of a result of comparing the plurality of theoretical values 68 included in the travel strategy 66 with the plurality of received index values 58. Here, the theoretical value 68 may be updated, for example, in the same manner as in the first to fourth examples described above.

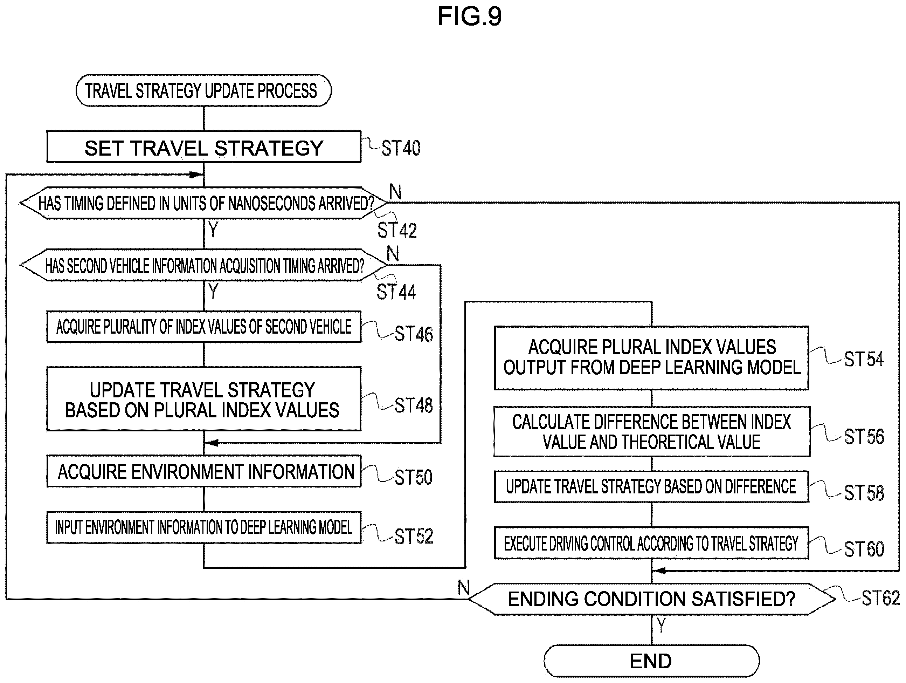

Fig. 9 is a flowchart showing an example of a flow of a travel strategy update process executed by the information processing device 1C of the first vehicle 54A.

In the travel strategy update process shown in Fig. 9, in step ST30, the strategy setting unit 40 sets the travel strategy 66 for the strategy update unit 31. After the process in step ST30 is executed, the travel strategy update process proceeds to step ST32.

In step ST32, the strategy update unit 31 determines whether or not a timing defined in units of nanoseconds has arrived (for example, whether or not a nanosecond has elapsed). In a case in which the timing defined in units of nanoseconds has not arrived in step ST32, the determination is negative, and the travel strategy update process proceeds to step ST32. In a case in which the timing defined in units of nanoseconds has arrived in step ST32, the determination is positive, and the travel strategy update process proceeds to step ST34.

In step ST34, the strategy update unit 31 determines whether or not a second vehicle information acquisition timing has arrived. The second vehicle information acquisition timing is a timing at which the strategy update unit 31 acquires the plurality of index values 58 inferred by the inference unit 20 of the second vehicle 54B. A first example of the second vehicle information acquisition timing is a timing that satisfies a condition that the index value 58 related to the second vehicle 54B has been updated, the index value 58 being stored in the database 74. A second example of the second vehicle information acquisition timing is a timing that satisfies a condition that a predetermined time (for example, several seconds) has elapsed since the process in step ST32 was executed.

In step ST34, in a case in which the second vehicle information acquisition timing has not arrived, the determination is negative, and the travel strategy update process proceeds to step ST40. In a case in which the second vehicle information acquisition timing has arrived in step ST34, the determination is positive, and the travel strategy update process proceeds to step ST36.

In step ST36, the strategy update unit 31 acquires a plurality of index values 58 related to the second vehicle 54B (that is, the plurality of index values 58 associated with the vehicle identifier 76 that can specify the second vehicle 54B) from the data management device 72. After the process in step ST36 is executed, the travel strategy update process proceeds to step ST38.

In step ST38, the strategy update unit 31 updates the travel strategy 66 on the basis of the plurality of index values 58 acquired from the data management device 72 in step ST36. That is, the plurality of theoretical values 68 included in the travel strategy 66 are updated on the basis of the plurality of index values 58 acquired from the data management device 72. After the process in step ST38 is executed, the travel strategy update process proceeds to step ST40.

In step ST40, the information acquisition unit 10 acquires the environment information 56. After the process in step ST32 is executed, the travel strategy update process proceeds to step ST42.

In step ST42, the inference unit 20 inputs the environment information 56 acquired by the information acquisition unit 10 in step ST40 to the deep learning model 20A. In response to this, the deep learning model 20A outputs the index value 58 corresponding to the input environment information 56. After the process in step ST42 is executed, the travel strategy update process proceeds to step ST44.

In step ST44, the strategy update unit 31 acquires a plurality of index values 58 output from the deep learning model 20A. After the process in step ST44 is executed, the travel strategy update process proceeds to step ST46.

In step ST46, the strategy update unit 31 calculates the differences 70 between the plurality of index values 58 and the plurality of theoretical values 68 included in the travel strategy 66. After the process in step ST46 is executed, the travel strategy update process proceeds to step ST48.

In step ST48, the strategy update unit 31 updates the travel strategy 66 by updating the plurality of theoretical values 68 included in the travel strategy 66 on the basis of the differences 70 calculated in step ST46. After the process in step ST48 is executed, the travel strategy update process proceeds to step ST50.

In step ST50, the driving control unit 30 executes driving control of the vehicle 54 according to the travel strategy 66 updated in step ST48. After the process in step ST40 is executed, the travel strategy update process proceeds to step ST42.

In step ST52, the strategy update unit 31 determines whether or not a condition for ending the travel strategy update process is satisfied. As an example of the condition for ending the travel strategy update process, there is a condition that an instruction to end the travel strategy update process is given to the information processing device 1C. In a case in which the condition for ending the travel strategy update process is not satisfied in step ST52, the determination is negative, and the travel strategy update process proceeds to step ST32. In a case in which the condition for ending the travel strategy update process is satisfied in step ST52, the determination is positive, and the travel strategy update process is ended.

As described above, in the fourth embodiment, the information processing device 1C is mounted on a plurality of vehicles 54 including the first vehicle 54A and the second vehicle 54B, and the information processing device 1C includes the information acquisition unit 10, the inference unit 20, the driving control unit 30, the strategy update unit 31, and the strategy setting unit 40 described in the first and second embodiments. Before the first vehicle 54A reaches a destination, the strategy update unit 31 updates the travel strategy 66 set by the strategy setting unit 40 on the basis of the plurality of index values 58 inferred by the inference unit 20 of the second vehicle 54B preceding the first vehicle 54A with respect to the destination. As a result, the information processing device 1C of the first vehicle 54A can obtain the travel strategy 66 according to an actual environment until reaching the destination. As a result, it is possible to realize highly accurate autonomous driving in consideration of the actual environment until the first vehicle 54A travels to reach the destination.

In the fourth embodiment, the plurality of index values 58 (that is, the plurality of index values 58 inferred by the inference unit 20 of the second vehicle 54B) used for updating the travel strategy 66 are acquired by the strategy update unit 31 of the first vehicle 54A before the first vehicle 54A reaches the destination and while the first vehicle 54A is traveling.

Therefore, before first vehicle 54A travels to reach the destination and while first vehicle 54A is traveling, it is possible to realize highly accurate autonomous driving in consideration of the actual environment until first vehicle 54A travels to reach the destination.

In the fourth embodiment, the plurality of index values 58 (that is, the plurality of index values 58 inferred by the inference unit 20 of the second vehicle 54B) used for updating the travel strategy 66 are acquired by the strategy update unit 31 of the first vehicle 54A before the second vehicle 54B reaches the destination. Therefore, compared with a case in which the plurality of index values 58 inferred by the inference unit 20 of the second vehicle 54B are acquired by the strategy update unit 31 of the first vehicle 54A after the second vehicle 54B reaches the destination, the strategy update unit 31 of the first vehicle 54A can update the travel strategy 66 earlier.

In the fourth embodiment, before the first vehicle 54A reaches the destination, the strategy update unit 31 updates the plurality of theoretical values 68 included in the travel strategy 66 set by the strategy setting unit 40 on the basis of the plurality of index values 58 inferred by the inference unit 20 of the second vehicle 54B preceding the first vehicle 54A with respect to the destination. The driving control unit 30 of the first vehicle 54A executes driving control of the first vehicle 54A according to the plurality of theoretical values 68 updated by the strategy update unit 31. As a result, compared with a case in which the plurality of theoretical values 68 included in the travel strategy 66 are always constant, it is possible to realize highly accurate autonomous driving in consideration of the actual environment until the first vehicle 54A travels to reach the destination.

In the fourth embodiment, the data management device 72 collects and manages a plurality of index values 58 from a plurality of vehicles 54. The strategy update unit 31 of the first vehicle 54A updates the travel strategy 66 on the basis of the plurality of index values 58 acquired from the data management device 72. Therefore, the driving control unit 30 can execute the autonomous driving of the first vehicle 54A according to the travel strategy 66 updated on the basis of the plurality of index values 58 obtained from the designated vehicle 54 (for example, the second vehicle 54B) among the plurality of vehicles 54.

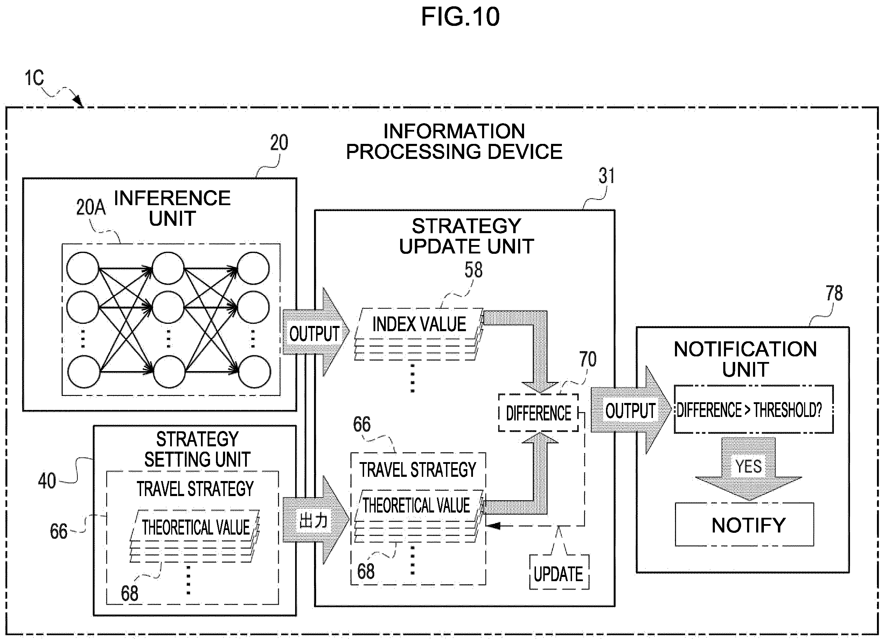

In the fourth embodiment, the form example in which the difference 70 is used for updating the travel strategy 66 has been described, but an application of the difference 70 is not limited thereto. For example, as shown in Fig. 10, the information processing device 1C may further include a notification unit 78, and the notification unit 78 may provide a notification according to the difference 70. For example, the notification unit 78 determines whether or not the difference 70 exceeds a threshold, and notifies that the difference 70 exceeds the threshold in a case in which the difference 70 exceeds the threshold. The threshold may be a fixed value (for example, a default value) or a variable value that is changed in accordance with an instruction given from a user or the like to the information processing device 1C. The notification is realized by, for example, visible display using a display and/or sound output using a sound reproducing device.

The notification need not be provided every time the difference 70 is calculated, and the notification may be provided in a case in which the number of times the difference 70 exceeds the threshold (for example, the number of times the difference 70 has continuously exceeded the threshold) exceeds a predetermined number of times (for example, the number of times determined in accordance with an instruction given from the user or the like to the information processing device 1C), or the notification may be provided in a case in which the number of times the difference 70 exceeds the threshold within a predetermined period (for example, a period determined in accordance with an instruction given from the user or the like to the information processing device 1C) exceeds a predetermined number of times.

The difference 70 used for comparison with the threshold may be a difference between the theoretical value 68 and the index value 58 for one item among a plurality of items (for example, a route until the vehicle 54 reaches a destination, a traveling speed until the vehicle 54 reaches the destination, an inclination of the ground until the vehicle 54 reaches the destination, and a brake control value until the vehicle 54 reaches the destination), or may be a difference between the theoretical value 68 and the index value 58 for each of the plurality of items.

In each of the above embodiments, a difference (for example, difference 70) between the theoretical value 68 and the index value 58 has been exemplified, but this is merely an example, and a value that can specify a result of comparing the theoretical value 68 with the index value 58. Examples of the value that can specify a result of comparing the theoretical value 68 with the index value 58 include, in addition to the difference, a ratio of the other to one of the theoretical value 68 and the index value 58.

In the fourth embodiment, the form example has been described in which the strategy update unit 31 of the first vehicle 54A acquires a plurality of index values 58 corresponding to the second vehicle 54B before the second vehicle 54B reaches a destination, but this is merely an example. For example, the strategy update unit 31 of the first vehicle 54A may acquire a plurality of index values 58 corresponding to the second vehicle 54B after the second vehicle 54B reaches the destination.

In the fourth embodiment, the form example has been described in which the strategy update unit 31 of the first vehicle 54A acquires a plurality of index values 58 corresponding to the second vehicle 54B from the data management device 72, but the technology of the disclosure is not limited thereto. For example, the strategy update unit 31 of the first vehicle 54A may acquire a plurality of index values 58 inferred by the inference unit 20 from the information processing device 1C of the second vehicle 54B by performing direct communication between the information processing device 1C of the first vehicle 54A and the information processing device 1C of the second vehicle 54B. For example, every time the index value 58 is inferred by the inference unit 20 of the second vehicle 54B (for example, every time index value 58 corresponding to the second vehicle 54B is updated in the data management device 72), the index value 58 inferred by the inference unit 20 of the second vehicle 54B may be acquired by the strategy update unit 31 of the first vehicle 54A and used for updating the travel strategy 66.

In the fourth embodiment described above, the form example has been described in which the plurality of theoretical values 68 include a theoretical value of a route until the vehicle 54 reaches a destination, a theoretical value of a traveling speed until the vehicle 54 reaches the destination, a theoretical value of an inclination of the ground until the vehicle 54 reaches the destination, and a theoretical value of a brake control value until the vehicle 54 reaches the distribution, but this is merely an example.

For example, the plurality of theoretical values 68 may include at least one of a theoretical value of a route until the vehicle 54 reaches a destination, a theoretical value of a traveling speed until the vehicle 54 reaches the destination, a theoretical value of an inclination of the ground until the vehicle 54 reaches the destination, and a theoretical value of a brake control value until the vehicle 54 reaches the destination.

In the fourth embodiment, the form example has been described in which while the first vehicle 54A is traveling, the plurality of index values 58 used for updating the travel strategy 66 are acquired by the strategy update unit 31 of the first vehicle 54A, but the technology of the disclosure is not limited thereto. For example, a plurality of index values 58 used for updating the travel strategy 66 may be acquired by the strategy update unit 31 of the first vehicle 54A before the first vehicle 54A reaches the destination and while the first vehicle 54A stops. As a result, even in a case in which the first vehicle 54A stops before reaching the destination, it is possible to realize highly accurate autonomous driving in consideration of an actual environment until the first vehicle 54A travels to reach the destination.

In the fourth embodiment, the form example has been described in which the index value 58 inferred by the inference unit 20 of the second vehicle 54B is directly used for updating the travel strategy 66 of the first vehicle 54A, but this is merely an example. For example, the index value 58 (that is, the index value 58 inferred by the inference unit 20 of the second vehicle 54B) may be adjusted according to an adjustment value (for example, a weight) determined according to the reliability with respect to the index value 58 inferred by the inference unit 20 of the second vehicle 54B, and the theoretical value 68 may be updated on the basis of the adjusted index value 58 as in the fourth embodiment.

For example, the reliability of the index value 58 inferred by the inference unit 20 of the second vehicle 54B differs, in a case in which the first vehicle 54A and the second vehicle 54B pass through the same point (hereinafter, referred to as a "first point"), depending on a time interval between a time point at which the index value 58 is inferred by the inference unit 20 of the second vehicle 54B at the time of traveling through the first point and a time point at which the first vehicle 54A travels through the first point. For example, the longer the time interval between the time point at which the index value 58 is inferred by the inference unit 20 of the second vehicle 54B at the time of traveling through the first point and the time point at which the first vehicle 54A travels through the first point, the lower the reliability of the index value 58 inferred by the inference unit 20 of the second vehicle 54B. Conversely, the shorter the time interval between the time point at which the index value 58 is inferred by the inference unit 20 of the second vehicle 54B at the time of traveling through the first point and the time point at which the first vehicle 54A travels through the first point, the higher the reliability of the index value 58 inferred by the inference unit 20 of the second vehicle 54B.

Therefore, when the theoretical value 68 is updated, as the time interval is longer, the strategy update unit 31 of the first vehicle 54A adjusts the index value 58 by using an adjustment value that reduces the influence of the index value 58 (for example, the index value 58 inferred by the inference unit 20 of the second vehicle 54B at the time of traveling through the first point) on the theoretical value 68, and updates the theoretical value 68 on the basis of the adjusted index value 58. When the theoretical value 68 is updated, as the time interval is shorter, the strategy update unit 31 of the first vehicle 54A adjusts the index value 58 by using an adjustment value that increases the influence of the index value 58 (for example, the index value 58 inferred by the inference unit 20 of the second vehicle 54B at the time of traveling through the first point) on the theoretical value 68, and updates the theoretical value 68 on the basis of the adjusted index value 58.

Here, the time interval between a time point at which the index value 58 is inferred by the inference unit 20 of the second vehicle 54B at the time of traveling through the first point and a time point at which the first vehicle 54A travels through the first point is exemplified, but this is merely an example. For example, the index value 58 (that is, the index value 58 inferred by the inference unit 20 of the second vehicle 54B) may be adjusted according to an adjustment value (for example, a weight) determined according to a difference between an external environment in a case in which the second vehicle 54B travels through the first point and an external environment in a case in which the first vehicle 54A travels through the first point, and the theoretical value 68 may be updated on the basis of the adjusted index value 58 in the same manner as in the fourth embodiment.

In this case, for example, in a case in which the external environment when the second vehicle 54B travels through the first point and the external environment when the first vehicle 54A travels through the first point are exactly the same, an adjustment value is unnecessary (that is, adjustment of the index value 58 is unnecessary). The index value 58 (that is, the index value 58 inferred by the inference unit 20 of the second vehicle 54B) may be adjusted with a larger adjustment value as the degree of difference between the external environment in a case in which the second vehicle 54B travels through the first point and the external environment in a case in which the first vehicle 54A travels through the first point becomes larger, and the theoretical value 68 may be updated on the basis of the adjusted index value 58 in the same manner as in the fourth embodiment.

The external environment is an environment outside the vehicle 54. Examples of the external environment include weather conditions. The weather conditions include, for example, the degree of rainfall, the degree of snowfall, the temperature of the outside air, the humidity of the outside air, a wind speed, and/or a wind direction. The degree of difference between the external environment in a case in which the second vehicle 54B travels through the first point and the external environment in a case in which the first vehicle 54A travels through the first point may be specified, for example, from the degree of difference (for example, a difference or a ratio) between a weather condition related index value (that is, the index value 58 related to a weather condition) inferred by the inference unit 20 of the first vehicle 54A and a weather condition related index value inferred by the inference unit 20 of the second vehicle 54B.

(Supplements)

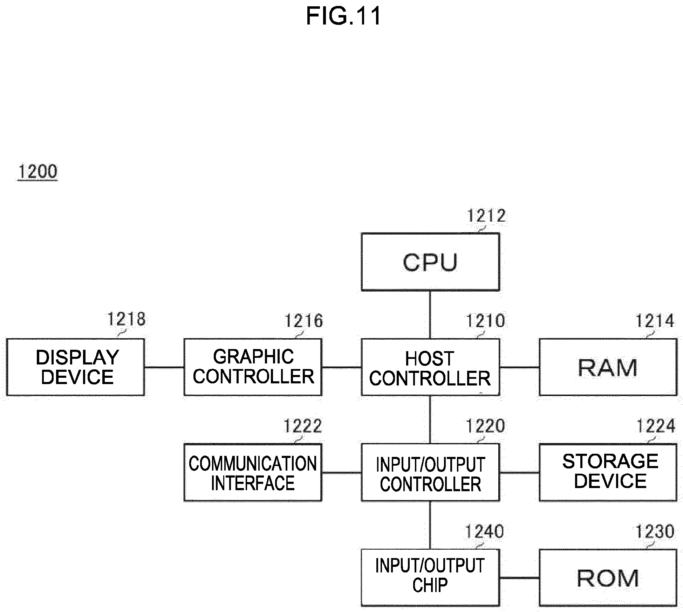

Fig. 11 schematically shows an example of a hardware configuration of a computer 1200 that functions as the information processing device (for example, a central brain) described above. A program installed in the computer 1200 can cause the computer 1200 to function as one or more "units" of the apparatus according to each of the above-described embodiments, or cause the computer 1200 to execute an operation associated with the apparatus according to each of the embodiments or one or more "units" thereof, and/or cause the computer 1200 to execute a process according to each of the embodiments or a stage of the process. Such a program may be executed by a CPU 1212 to cause the computer 1200 to execute specific operations associated with some or all of the blocks in the flowcharts and the block diagrams described in the present specification.

The computer 1200 according to each embodiment may include the CPU 1212, a RAM 1214, and a graphic controller 1216, which may be connected to each other via a host controller 1210. The computer 1200 may also include input/output units such as a communication interface 1222, a storage device 1224, a DVD drive, and an IC card drive, which may be connected to the host controller 1210 via the input/output controller 1220. The DVD drive may be a DVD-ROM drive, a DVD-RAM drive, or the like. The storage device 1224 may be a hard disk drive, a solid state drive, or the like. The computer 1200 may also include a ROM 1230 and legacy input/output units such as a keyboard, which may be connected to the input/output controller 1220 via an input/output chip 1240.

The CPU 1212 can control each unit by operating according to programs stored in the ROM 1230 and the RAM 1214. The graphic controller 1216 may obtain image data generated by the CPU 1212 in a frame buffer or the like provided in the RAM 1214 or itself, so that the image data is displayed on the display device 1218.

The communication interface 1222 can communicate with other electronic devices via a network. The storage device 1224 can store programs and data used by the CPU 1212 of the computer 1200. The DVD drive can read a program or data from a DVD-ROM or the like and provide the program or data to the storage device 1224. The IC card drive can read programs and data from an IC card and/or write programs and data into the IC card.

The ROM 1230 may store therein boot programs executed by the computer 1200 at the time of activation, and/or programs that depend on the hardware of the computer 1200. The input/output chip 1240 may also connect various input/output units to the input/output controller 1220 via a USB port, a parallel port, a serial port, a keyboard port, a mouse port, or the like.

The program may be provided by a computer readable storage medium such as a DVD-ROM or an IC card. The program may be read from a computer readable storage medium, installed in the storage device 1224, the RAM 1214, or the ROM 1230, which is also an example of a computer readable storage medium, and executed by the CPU 1212. The information processing described in such a program can be read by the computer 1200 to provide cooperation between the program and the various types of hardware resources. A device or a method may be configured by implementing operation or processing of information according to use of the computer 1200.

For example, in a case in which communication is executed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 can read transmission data stored in a transmission buffer area provided in a recording medium such as the RAM 1214, the storage device 1224, the DVD-ROM, or the IC card, transmit the read transmission data to the network, or write reception data received from the network in a reception buffer area or the like provided on the recording medium.

The CPU 1212 may cause the RAM 1214 to read the whole or a necessary portion of a file or a database stored in an external recording medium such as the storage device 1224, a DVD drive (DVD-ROM), or an IC card, and may execute various types of processing on data in the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and specified by a program instruction sequence, and may write back the results to the RAM 1214. The CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches a designated condition from the plurality of entries, read the attribute value of the second attribute stored in the entry, and thus acquire the attribute value of the second attribute associated with the first attribute satisfying a predetermined condition.

The program or software module described above may be stored in a computer readable storage medium on the computer 1200 or in the vicinity of the computer 1200. A recording medium such as a hard disk or a RAM provided in a server system connected to a dedicated communication network or the Internet can be used as a computer readable storage medium, whereby the program can be provided to the computer 1200 via the network.

Blocks in the flowcharts and the block diagrams in the embodiments may represent stages of a process in which an operation is performed or "units" of a device having a role of performing an operation. Specific stages and "units" may be implemented by a dedicated circuit, a programmable circuit supplied along with computer readable instructions stored on a computer readable storage medium, and/or a processor supplied along with computer readable instructions stored on a computer readable storage medium. Dedicated circuits may include digital and/or analog hardware circuits, and may include integrated circuits (ICs) and/or discrete circuits. Programmable circuits may include reconfigurable hardware circuits including, for example, AND, OR, XOR, NAND, NOR, and other logical operations, flip-flops, registers, and memory elements, such as field programmable gate arrays (FPGA) and programmable logic arrays (PLA).

Computer readable storage media may include any tangible device capable of storing instructions executed by a suitable device, and, as a result, a computer readable storage medium having instructions stored thereon has a product including instructions that may be executed to create means for executing operations designated in the flowcharts or block diagrams. Examples of the computer readable storage medium may include an electronic storage medium, a magnetic storage medium, an optical storage medium, an electromagnetic storage medium, and a semiconductor storage medium. More specific examples of the computer readable storage medium may include a Floppy (registered trademark) disk, a diskette, a hard disk, a random access memory (RAM), a read-only memory (ROM), an erasable programmable read-only memory (an EPROM or a flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, and an integrated circuit card.

The computer readable instructions may include either source codes or object codes written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), or JAVA (registered trademark), C++, and conventional procedural programming languages such as the "C" programming language or similar programming languages.

The computer readable instructions may be provided to a processor of a general purpose computer, a special purpose computer, or another programmable data processing device, or a programmable circuit locally or via a local area network (LAN) or a wide area network (WAN) such as the Internet, in order to cause the processor of the general purpose computer, the special purpose computer, or another programmable data processing device or the programmable circuit to execute the computer readable instructions to generate means for executing operations designated in the flowcharts or the block diagrams. Examples of the processor include a computer processor, a processing unit, a microprocessor, a digital signal processor, a controller, and a microcontroller.

Although the present invention has been described by using the embodiments, the technical scope of the invention is not limited to the scope described in the above embodiments. It is apparent to those skilled in the art that various modifications or improvements can be made to the above embodiments. It is apparent from the description of the claims that modes to which such modifications or improvements are added can also be included in the technical scope of the invention.

It should be noted that the order of execution of each piece of processing of operations, procedures, steps, stages, and the like in the devices, the systems, the programs, and the methods shown in the claims, the specification, and the drawings can be realized in any order unless "before", "prior to", or the like is explicitly stated, and unless the output of the previous processing is used in the later processing. Even in a case in which the operation flow in the claims, the specification, and the drawings is described by using "first,", "next,", and the like for convenience, this does not mean that it is essential to perform in this order.

In the present specification, "α and/or β" is synonymous with "at least one of α and β". That is, "α and/or β" means only α, only β, or a combination of α and β. In the present specification, the same concept as "α and/or β" is applied also in a case in which three or more matters are expressed by being connected by "and/or".

This application is based on Japanese Patent Application No. 2022-170165 filed in Japan on October 24, 2022, Japanese Patent Application No. 2022-196484 filed on December 8, 2022, and Japanese Patent Application No. 2022-196485 filed on December 8, 2022, the contents of which are incorporated herein by reference.

All documents, including publications, patent applications and patents cited herein, are hereby incorporated by reference to the same extent as in a case in which each document were individually specifically indicated and incorporated by reference, and all of the contents thereof were set forth herein.

The use of nouns and similar referents used in connection with the description of the disclosure (particularly in connection with the following claims) are to be construed to cover both the singular and the plural, unless otherwise indicated herein or clearly contradicted by context. The phrases "comprising", "having", and "including" are to be construed as openended terms (i.e., meaning "including but not limited to") unless otherwise noted. Recitation of numerical ranges herein are merely intended to serve as shorthand for referring individually to each value falling within the range, unless otherwise indicated herein, and each value is incorporated into the specification as in a case in which it were individually recited herein. All methods described herein can be performed in any suitable order unless otherwise indicated herein or clearly contradicted by context. Any example or exemplary language (e.g., "such as") used herein is intended merely to better illustrate the disclosure and does not pose a limitation on the scope of the disclosure unless otherwise claimed. No language in the specification should be construed as indicating any non-claimed element as essential to the practice of the disclosure.

Preferred embodiments of the disclosure are described herein, including the best mode known to the inventors for carrying out the disclosure. Variations of these preferred embodiments will be apparent to those skilled in the art upon reading the above description. The inventors expect skilled artisans to apply such variations as appropriate, and expect the disclosure to be practiced otherwise than as specifically described herein. Accordingly, the disclosure includes all modifications and equivalents to the contents of the claims appended hereto as permitted by applicable law. Moreover, any combination of the above elements in all variations is included in the disclosure unless otherwise indicated herein or clearly contradicted by context.

**Claims**

1. An information processing device comprising:

   an information acquisition unit that is capable of acquiring a plurality of pieces of information related to a vehicle;
   an inference unit that uses deep learning to infer a plurality of index values from the plurality of pieces of information acquired by the information acquisition unit; and
   a driving control unit that executes driving control of the vehicle on the basis of the plurality of index values.

2. The information processing device according to claim 1, wherein
   the inference unit infers the plurality of index values from the plurality of pieces of information through multivariate analysis according to an integral method using the deep learning.

3. The information processing device according to claim 1, wherein
   the information acquisition unit acquires the plurality of pieces of information in units of nanoseconds, and the inference unit and the driving control unit execute inference of the plurality of index values and driving control of the vehicle in units of nanoseconds by using the plurality of pieces of information acquired in units of nanoseconds.

4. The information processing device according to claim 1, further comprising:

   a strategy setting unit that sets a travel strategy until the vehicle reaches a destination, wherein
   the travel strategy includes at least one theoretical value of an optimal route to the destination, a driving speed, a tilt, or braking, and
   the driving control unit includes a strategy update unit that updates the travel strategy on the basis of a difference between the plurality of index values and the theoretical value.

5. The information processing device according to claim 1, wherein
   the information acquisition unit includes a sensor that is provided in a lower portion of the vehicle and is capable of detecting a temperature, a material, and a tilt of a traveling ground.

6. The information processing device according to claim 1, wherein

the plurality of index values include a first index value related to a first distance including a required stop distance required for the vehicle to stop without colliding with an obstacle in a traveling direction of the vehicle between the obstacle and the vehicle,
the driving control includes traveling speed control, and
the traveling speed control is control of a traveling speed of the vehicle, and is executed on the basis of the first index value.

7. The information processing device according to claim 6, wherein

the traveling speed control includes control for causing the vehicle to travel at a maximum speed at which the vehicle does not collide with the obstacle, and
information regarding the maximum speed is calculated on the basis of the first index value.

8. The information processing device according to claim 7, wherein

the maximum speed is a maximum speed within a range of a legal speed or lower and/or within a range of a front vehicle speed or lower, and
the front vehicle speed is a traveling speed of another vehicle traveling in front of the vehicle.

9. The information processing device according to claim 6, wherein
the first distance is a distance obtained by combining the required stop distance and a margin distance.

10. An information processing device applied to each of a plurality of vehicles, the information processing device comprising:

an information acquisition unit that is capable of acquiring a plurality of pieces of information related to the vehicle;
an inference unit that infers a plurality of index values from the plurality of pieces of information acquired by the information acquisition unit by using a deep learning model;
a strategy setting unit that sets a travel strategy until the vehicle reaches a destination;
a strategy update unit that updates the travel strategy on the basis of the travel strategy set by the strategy setting unit and the plurality of index values; and
a driving control unit that executes driving control of the vehicle according to the travel strategy updated by the strategy update unit, wherein
before a first vehicle among the plurality of vehicles reaches the destination, the strategy update unit updates the travel strategy set by the strategy setting unit on the basis of the plurality of index values inferred by the inference unit of a second vehicle preceding the first vehicle among the plurality of vehicles with respect to the destination.

11. The information processing device according to claim 10, wherein
the strategy update unit acquires the plurality of index values used for updating the travel strategy before the first vehicle reaches the destination and while the first vehicle is traveling.

12. The information processing device according to claim 10, wherein
the strategy update unit acquires the plurality of index values used for updating the travel strategy before the second vehicle reaches the destination.

13. The information processing device according to claim 10, wherein

the travel strategy includes a plurality of theoretical values,
the plurality of theoretical values include a theoretical value of a route until the vehicle reaches the destination, a theoretical value of a traveling speed until the vehicle reaches the destination, a theoretical value of an inclination of a ground until the vehicle reaches the destination, and/or a theoretical value of a brake control value until the vehicle reaches the destination, and
the strategy update unit updates the travel strategy by updating the plurality of theoretical values on the basis of a result of comparison between the plurality of theoretical values and the plurality of index values.

14. The information processing device according to claim 13, further comprising:

a notification unit that provides a notification in a case in which a degree of difference between the theoretical value and the index value exceeds a threshold.

**15.** The information processing device according to claim 10, wherein

the strategy update unit acquires the plurality of index values from a data management device that collects and manages the plurality of index values for at least one vehicle among the plurality of vehicles, and updates the travel strategy on the basis of the plurality of index values acquired from the data management device.

**16.** The information processing device according to claim 10, wherein
the inference unit infers the plurality of index values from the plurality of pieces of information through multivariate analysis according to an integral method using the deep learning model.

**17.** The information processing device according to claim 10, wherein

the information acquisition unit acquires the plurality of pieces of information in units of nanoseconds, and the inference unit and the driving control unit execute inference of the plurality of index values and driving control of the vehicle in units of nanoseconds by using the plurality of pieces of information acquired in units of nanoseconds.

**18.** The information processing device according to claim 10, wherein

the information acquisition unit includes
a temperature sensor capable of detecting a temperature of a ground on which the vehicle travels,
a material sensor capable of detecting a material of the ground, and
an inclination sensor capable of detecting an inclination of the ground.

**19.** A vehicle comprising
the information processing device according to any one of claims 1 to 18.

**20.** A program for causing a computer to function as the information processing device according to any one of claims 1 to 18.

FIG.1

# FIG.2

INFORMATION ACQUISITION UNIT
10

Weather

Road resistance

Angle of road

⋮

INFERENCE UNIT
20

DRIVING CONTROL UNIT
30

INDEX VALUE

⋮

1

EP 4 610 134 A1

## FIG.3

INFORMATION ACQUISITION UNIT — 10

- Weather
- Road resistance
- Angle of road
⋮

INFERENCE UNIT — 20

DRIVING CONTROL UNIT — 30

STRATEGY UPDATE UNIT — 31

INDEX VALUE
⋮

THEORETICAL VALUE
⋮

STRATEGY SETTING UNIT — 40

1A

FIG.4

# FIG.5

INFORMATION ACQUISITION UNIT — 10

56 — ENVIRONMENT INFORMATION

56A — VEHICLE-TO-OBSTACLE DISTANCE

56B — TRAVELING SPEED

56C — AIR RESISTANCE

56D — ROAD RESISTANCE

56E — ROAD ELEMENT

56F — GROUND INCLINATION

INPUT

INFERENCE UNIT — 20

20A

OUTPUT

58 — INDEX VALUE (NON-COLLISION DISTANCE)

DRIVING CONTROL UNIT — 30

58 — INDEX VALUE (NON-COLLISION DISTANCE)

62 — TRAVELING SPEED ARITHMETIC EXPRESSION

64 — MAXIMUM SPEED

TRAVELING SPEED CONTROL AT MAXIMUM SPEED

EP 4 610 134 A1

# FIG.6

```
        ( TRAVELING SPEED CONTROL PROCESS )
                                                    ST10
                                                      N
   < HAS TIMING DEFINED IN UNITS OF NANOSECONDS ARRIVED? >
                          │ Y
        ┌────────────────────────────────────────┐
        │   ACQUIRE ENVIRONMENT INFORMATION       │── ST12
        └────────────────────────────────────────┘
        ┌────────────────────────────────────────┐
        │ INPUT ENVIRONMENT INFORMATION TO DEEP LEARNING MODEL │── ST14
        └────────────────────────────────────────┘
        ┌────────────────────────────────────────┐
        │   ACQUIRE INDEX VALUE OUTPUT            │── ST16
        │   FROM DEEP LEARNING MODEL              │
        └────────────────────────────────────────┘
        ┌────────────────────────────────────────┐
        │   CALCULATE MAXIMUM SPEED               │── ST18
        │   ON BASIS OF INDEX VALUE               │
        └────────────────────────────────────────┘
        ┌────────────────────────────────────────┐
        │ PERFORM CONTROL SUCH THAT VEHICLE TRAVELS AT MAXIMUM SPEED │── ST20
        └────────────────────────────────────────┘
      N
   < ENDING CONDITION SATISFIED? >── ST22
                          │ Y
                ( END )
```

# FIG.7

# FIG.8

DATA MANAGEMENT DEVICE — 72

76 VEHICLE IDENTIFIER ·············· VEHICLE IDENTIFIER — 74

58 — INDEX VALUE ············ INDEX VALUE — 58

STRATEGY UPDATE UNIT — 31

58 INDEX VALUE → UPDATE → TRAVEL STRATEGY 66

THEORETICAL VALUE 68

INFERENCE UNIT — 20

INDEX VALUE 58

54A(54)

54B(54)

1C

1C

# FIG.9

TRAVEL STRATEGY UPDATE PROCESS

SET TRAVEL STRATEGY —ST40

HAS TIMING DEFINED IN UNITS OF NANOSECONDS ARRIVED? — N  ST42
Y

HAS SECOND VEHICLE INFORMATION ACQUISITION TIMING ARRIVED? — N  ST44
Y

ACQUIRE PLURALITY OF INDEX VALUES OF SECOND VEHICLE —ST46

UPDATE TRAVEL STRATEGY BASED ON PLURAL INDEX VALUES —ST48

ACQUIRE ENVIRONMENT INFORMATION —ST50

INPUT ENVIRONMENT INFORMATION TO DEEP LEARNING MODEL —ST52

ACQUIRE PLURAL INDEX VALUES OUTPUT FROM DEEP LEARNING MODEL —ST54

CALCULATE DIFFERENCE BETWEEN INDEX VALUE AND THEORETICAL VALUE —ST56

UPDATE TRAVEL STRATEGY BASED ON DIFFERENCE —ST58

EXECUTE DRIVING CONTROL ACCORDING TO TRAVEL STRATEGY —ST60

ENDING CONDITION SATISFIED? — N  ST62
Y

END

EP 4 610 134 A1

# FIG.10

FIG.11

1200

1212
CPU

1218
DISPLAY DEVICE

1216
GRAPHIC CONTROLLER

1210
HOST CONTROLLER

1214
RAM

1222
COMMUNICATION INTERFACE

1220
INPUT/OUTPUT CONTROLLER

1224
STORAGE DEVICE

1240
INPUT/OUTPUT CHIP

1230
ROM

## INTERNATIONAL SEARCH REPORT

| International application No. |
| --- |
| **PCT/JP2023/038379** |

**A. CLASSIFICATION OF SUBJECT MATTER**

*B60W 40/02*(2006.01)i; *B60W 30/09*(2012.01)i; *B60W 40/00*(2006.01)i; *B60W 40/06*(2012.01)i; *B60W 60/00*(2020.01)i; *G01C 21/34*(2006.01)i; *G08G 1/0968*(2006.01)i; *G08G 1/16*(2006.01)i
FI: B60W40/02; B60W60/00; G01C21/34; G08G1/0968; B60W40/06; B60W30/09; G08G1/16 C; B60W40/00

According to International Patent Classification (IPC) or to both national classification and IPC

**B. FIELDS SEARCHED**

Minimum documentation searched (classification system followed by classification symbols)

B60W40/02; B60W30/09; B60W40/00; B60W40/06; B60W60/00; G01C21/34; G08G1/0968; G08G1/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/090897 A1 (SONY CORPORATION) 14 May 2021 (2021-05-14) paragraphs [0014]-[0218], fig. 1-14 | 1-4, 6-9 |
| Y | | 5, 19-20 |
| A | | 10-18 |
| Y | JP 2009-042115 A (MAZDA MOTOR CORP) 26 February 2009 (2009-02-26) paragraphs [0008]-[0009] | 5, 19-20 |
| Y | JP 2022-137732 A (SUZUKI MOTOR CORP) 22 September 2022 (2022-09-22) paragraphs [0015]-[0016] | 5, 19-20 |
| A | WO 2021/200037 A1 (NEC CORPORATION) 07 October 2021 (2021-10-07) paragraphs [0014]-[0078], fig. 1-9 | 1-20 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 December 2023** | **09 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/038379**

| Patent document cited in search report | Publication date (day/month/year) | Patent family member(s) | Publication date (day/month/year) |
|---|---|---|---|
| WO 2021/090897 A1 | 14 May 2021 | US 2023/0045416 A1 paragraphs [0046]-[0257], fig. 1-14 | |
| JP 2009-042115 A | 26 February 2009 | (Family: none) | |
| JP 2022-137732 A | 22 September 2022 | EP 4056437 A1 paragraphs [0016]-[0017] | |
| WO 2021/200037 A1 | 07 October 2021 | US 2023/0127338 A1 paragraphs [0030]-[0098], fig. 1-9 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022035198 A
- JP 2022170165 A
- JP 2022196484 A
- JP 2022196485 A